Europäisches Patentamt

European Patent Office

Office européen des brevets

(19)

(11) Numéro de publication : **0 176 442**
**B1**

(12)                     **FASCICULE DE BREVET EUROPÉEN**

(45) Date de publication du fascicule du brevet :
15.03.89

(51) Int. Cl.⁴ : **B 60 D   1/00**, B 60 D   1/14,
B 62 D 13/02, B 61 G   7/12

(21) Numéro de dépôt : 85401842.1

(22) Date de dépôt : 23.09.85

(54)   Dispositif d'attelage extensible pour véhicules routiers et ferroviaires.

(30) Priorité : 24.09.84 FR 8414608

(43) Date de publication de la demande :
02.04.86 Bulletin 86/14

(45) Mention de la délivrance du brevet :
15.03.89 Bulletin 89/11

(84) Etats contractants désignés :
AT BE CH DE FR GB IT LI LU NL SE

(56) Documents cités :
EP--A-- 0 033 873
DE--A-- 3 147 543
DE--A-- 3 150 335
FR--A-- 2 533 172
NL--A-- 8 301 911
US--A-- 3 606 387

(73) Titulaire : Jeanson, René Henri
Rue de la Cour AUZAY
F-85200 Fontenay le Comte (FR)

Lamothe, Guy
Rue Gallot
F- 85200 Fontenay le Comte (FR)

(72) Inventeur : Jeanson, René Henri
Rue de la Cour AUZAY
F-85200 Fontenay le Comte (FR)
Inventeur : Lamothe, Guy
Rue Gallot
F- 85200 Fontenay le Comte (FR)

(74) Mandataire : Lemoine, Robert et al
Cabinet Malémont 42, Avenue du Président Wilson
F-75116 Paris (FR)

## Description

La présente invention concerne un véhicule comportant un châssis et un dispositif d'attelage extensible dont l'extrémité antérieure est pourvue d'un dispositif d'accrochage apte à être relié à l'arrière d'un autre véhicule, le dispositif d'attelage étant du type comprenant un vérin hydraulique comportant un cylindre, un piston, une tige de piston et une chambre contenant un fluide hydraulique ; et un circuit hydraulique comportant un réservoir relié à la chambre du vérin par l'intermédiaire de deux canalisations dont l'une comporte une pompe hydraulique.

DE-A-3 150 335 décrit un dispositif d'attelage extensible du type précité qui ne permet pas d'augmenter automatiquement l'espacement de deux véhicules attelés lorsque ceux-ci forment entre eux un angle supérieur à un angle prédéterminé, et qui ne peut donc pas éviter que les véhicules attelés se heurtent dans les virages.

La présente invention se propose de remédier à cette lacune et, pour ce faire, elle a pour objet un véhicule comportant un châssis et un dispositif d'attelage extensible du type précité, ce véhicule étant caractérisé en ce que l'autre canalisation comporte un clapet normalement fermé et en ce que le dispositif d'attelage comprend en outre des organes élastiques sollicitant le dispositif d'accrochage en direction de l'autre véhicule ; des moyens de détection pour commander l'ouverture du clapet lorsque les deux véhicules, en position attelée, forment entre eux un angle supérieur à un angle déterminé, et permettre aux organes élastiques de faire avancer le dispositif d'accrochage en direction de l'autre véhicule en refoulant dans le réservoir le fluide hydraulique contenu dans la chambre ; et des moyens de commande pour actionner la pompe hydraulique afin que le fluide hydraulique refoulé par celle-ci dans la chambre fasse reculer le dispositif d'accrochage à l'encontre de l'action des organes élastiques.

Grâce à ce dispositif, il est possible maintenant de réduire jusqu'à environ 20 ou 30 centimètres l'espacement entre deux véhicules attelés, tout en évitant que ceux-ci se heurtent dans les virages. Les phénomènes de turbulence et les pertes d'énergie correspondantes peuvent donc être limités au maximum. Les efforts transversaux engendrés par les dispositifs d'attelage extensibles réalisés actuellement sont par ailleurs supprimés.

De préférence, les organes élastiques sont constitués par un gaz sous pression contenu dans une cavité séparée de la chambre par le piston et alimentée en gaz sous pression à partir d'une réserve.

L'utilisation d'un gaz sous pression pour déplacer le dispositif d'accrochage en direction du véhicule de tête permet la réalisation d'un dispositif d'attelage parfaitement sûr.

Selon un mode de réalisation particulier de l'invention, la cavité est située entre le piston et l'extrémité postérieure du cylindre tandis que la réserve est constituée par un compartiment annulaire situé entre le cylindre et un tube extérieur coaxial à celui-ci.

Le gaz sous pression est donc dans ce cas stocké autour du cylindre du vérin hydraulique, ce qui permet de réaliser le dispositif d'attelage sous une forme compacte et par conséquent peu encombrante.

Avantageusement, la tige de piston est déplaçable axialement par rapport au cylindre et porte le dispositif d'accrochage et le piston respectivement à ses extrémités antérieure et postérieure. Par ailleurs, la chambre est en avant du piston, lequel porte à son extrémité postérieure un prolongement axial ménageant un espace avec l'extrémité postérieure du cylindre lorsque la tige de piston est complètement rétractée dans celui-ci.

La présence de cet espace permet au gaz sous pression de jouer un rôle d'amortisseur lorsque, la tige de piston étant complétement rétractée, le dispositif d'accrochage est soumis à un effort de poussée intense vers le véhicule de tête.

Il est par ailleurs souhaitable que le dispositif d'accrochage soit prévu à l'extrémité antérieure d'un tenon enfilé dans l'extrémité libre de la tige de piston et comportant des moyens pour le relier à celle-ci dans l'une quelconque de plusieurs positions décalées axialement.

Cette solution a en effet l'avantage d'élargir la plage de réglage de l'espacement des deux véhicules attelés.

Selon un autre mode de réalisation, la tige de piston porte le piston à son extrémité antérieure tandis que le cylindre, qui est déplaçable axialement par rapport à elle, est doublé extérieurement par une enveloppe cylindrique montée coulissante dans un tube extérieur coaxial à la tige de vérin, l'enveloppe étant solidaire de l'extrémité antérieure du cylindre et obturée à son extrémité antérieure par une paroi frontale portant le dispositif d'accrochage.

Dans cet autre mode de réalisation, la chambre est en arrière du piston, ladite chambre étant constituée par un canal axial ménagé dans la tige de piston et par une chambre annulaire ménagée entre la tige de piston et le cylindre. Par ailleurs, la cavité est située entre le piston et l'extrémité antérieure du cylindre tandis que la réserve est constituée par un compartiment annulaire s'étendant entre le cylindre et l'enveloppe et éventuellement entre la tige de piston et le tube extérieur et par deux réservoirs de gaz sous pression.

Pour compenser les fuites qui pourraient éventuellement se former, la réserve comporte avantageusement des moyens pour la relier à une source de gaz sous pression installée au sol et/ou sur le véhicule.

Dans le cas où le gaz sous pression est de l'air comprimé, la réserve pourrait bien entendu comporter une valve pour permettre sa liaison aux compresseurs disponibles dans tous les garages, ou être reliée en permanence, par l'intermédiaire d'une conduite munie d'un clapet anti-retour, au réservoir d'air comprimé prévu sur le véhicule.

Conformément à une autre caractéristique de l'invention, le dispositif d'attelage se présente sous la forme d'une flèche triangulée comportant un élément axial constitué par le vérin hydraulique et le tube extérieur.

La structure du dispositif d'attelage présentant cette caractéristique est particulièrement robuste, ce qui élimine tout risque de défaillance et par suite d'accidents.

En ce qui concerne le circuit hydraulique, il comprend une soupape de sécurité montée en parallèle avec le clapet normalement fermé.

Lorsque le véhicule de tête soumet le dispositif d'accrochage à un effort de traction dont l'intensité est supérieure à la pression de tarage de la soupape de sécurité, celle-ci s'ouvre pour permettre à une partie du fluide contenu dans la chambre annulaire du vérin hydraulique de retourner vers le réservoir et peut donc jouer un rôle d'amortisseur hydraulique.

Lorsque le véhicule comprend un train avant monté sur des roues, une couronne à billes ayant une partie fixe solidaire du châssis et une partie tournante solidaire du train avant, les moyens de détection comprennent de préférence un support monté pivotant sur le châssis dudit véhicule, autour d'un axe perpendiculaire à l'axe longitudinal de celui-ci ; une plaque dirigée vers le haut et formant un angle déterminé avec la verticale lorsque les deux véhicules sont alignés, l'extrémité inférieure de cette plaque étant solidaire du support tandis que son extrémité supérieure porte une tringle transversale en contact avec l'arrière de l'autre véhicule ; un bras horizontal dont l'une des extrémités est articulée sur le support et dont l'autre extrémité porte un galet de guidage en appui contre une surface circulaire solidaire de et coaxiale avec la partie tournante de la couronne à billes du train avant, ce bras étant situé sur l'axe longitudinal dudit véhicule et déplaçable le long de cet axe ; des moyens pour rappeler la tringle transversale contre l'arrière de l'autre véhicule, et une tringlerie interposée entre le bras et le clapet pour ouvrir ce dernier lorsque la plaque forme avec la verticale un angle inférieur à l'angle déterminé.

Grâce à ce montage particulier, l'ouverture du clapet peut être commandée chaque fois que les deux véhicules négocient une courbe dans l'un ou l'autre sens. Dans un virage, le véhicule de tête contraint en effet la tringle transversale à se rapprocher du véhicule remorqué et le support à pivoter dans le sens entraînant une diminution dudit angle déterminé, c'est-à-dire dans le sens permettant l'ouverture du clapet.

Avantageusement, la surface circulaire comporte deux saillies positionnées pour venir contre le galet de guidage dès que le dispositif d'attelage forme dans l'un ou l'autre sens avec l'axe longitudinal dudit véhicule un angle de l'ordre de 20°.

Ainsi, lorsque les saillies viennent devant le galet de guidage, le bras horizontal se déplace vers l'avant et fait donc pivoter le support de telle sorte que la tringle transversale vient contre le côté transversal avant du véhicule remorqué où elle ne risque pas d'être détériorée accidentellement dans les virages très courts.

De préférence, le support porte une patte conformée pour actionner les moyens de commande de la pompe hydraulique lorsque la plaque forme avec la verticale un angle supérieur à l'angle déterminé.

Selon un mode de réalisation particulier de l'invention, les moyens de commande de la pompe hydraulique comprennent un bras supportant à rotation un axe sur lequel sont calés l'arbre d'entraînement de la pompe hydraulique et un galet parallèle et adjacent à l'une des roues du train avant, un vérin pneumatique dont la tige de piston est articulée sur le bras pour le déplacer entre une position active dans laquelle il applique le galet contre la roue et une position inactive dans laquelle il l'en éloigne, un circuit pneumatique comprenant une conduite reliant la chambre côté fond du vérin pneumatique à un électro-distributeur à deux positions relié à une source d'air comprimé, et un interrupteur pour actionner l'électro-distributeur de telle sorte qu'il relie la chambre côté fond à l'atmosphère lorsque la tige de piston du vérin hydraulique est complètement rétractée et qu'il la relie à la source d'air comprimé lorsque la tige de piston du vérin hydraulique n'est pas complètement rétractée.

Dans ce cas, la pompe hydraulique n'est donc actionnée que si les deux véhicules se déplacent et forment un angle entre eux, ce qui réduit les risques d'usure et constitue une sécurité pour le personnel chargé de l'entretien.

Avantageusement, la chambre côté tige du vérin pneumatique renferme un ressort sollicitant le bras dans sa position inactive lorsque la chambre côté fond est reliée à l'atmosphère. Le rappel du bras dans sa position inactive peut ainsi être assuré de façon simple et automatique.

Un mode d'exécution de la présente invention sera décrit ci-après à titre d'exemple nullement limitatif en référence aux dessins annexés dans lesquels :

— la figure 1 est une vue de côté d'un ensemble routier composé d'un camion et d'une remorque équipée d'un dispositif d'attelage conforme à l'invention ;

— la figure 2 est une vue partielle de dessus du dispositif d'attelage de la remorque visible sur la figure 1 ;

— la figure 3 est une vue schématique montrant le circuit hydraulique et les moyens de commande de la pompe du circuit hydraulique ;

— la figure 4 est une vue schématique de côté montrant le bras, le vérin et le galet des moyens de commande de la pompe hydraulique ;

— la figure 5 est une vue selon la ligne V-V de la figure 4 ;

— la figure 6 est une vue schématique de côté montrant l'arrière du camion, l'avant de la remorque et les moyens de détection du dispositif d'attelage de celle-ci ;

— la figure 7 est une vue de dessus schématique et avec arrachement montrant les moyens de détection visibles sur la figure 6 ;

— la figure 8 est une vue selon la ligne VIII-VIII de la figure 6 ;

— la figure 9 est une vue à échelle agrandie montrant la liaison entre le support et le bras horizontal visibles sur les figures 6 à 8;

— la figure 10 est une vue en coupe longitudinale montrant une variante de réalisation du vérin hydraulique, le cylindre du vérin selon cette variante étant dans sa position reculée ; et

— la figure 11 est une vue analogue à celle de la figure 10, mais montrant partiellement le cylindre du vérin dans sa position avancée.

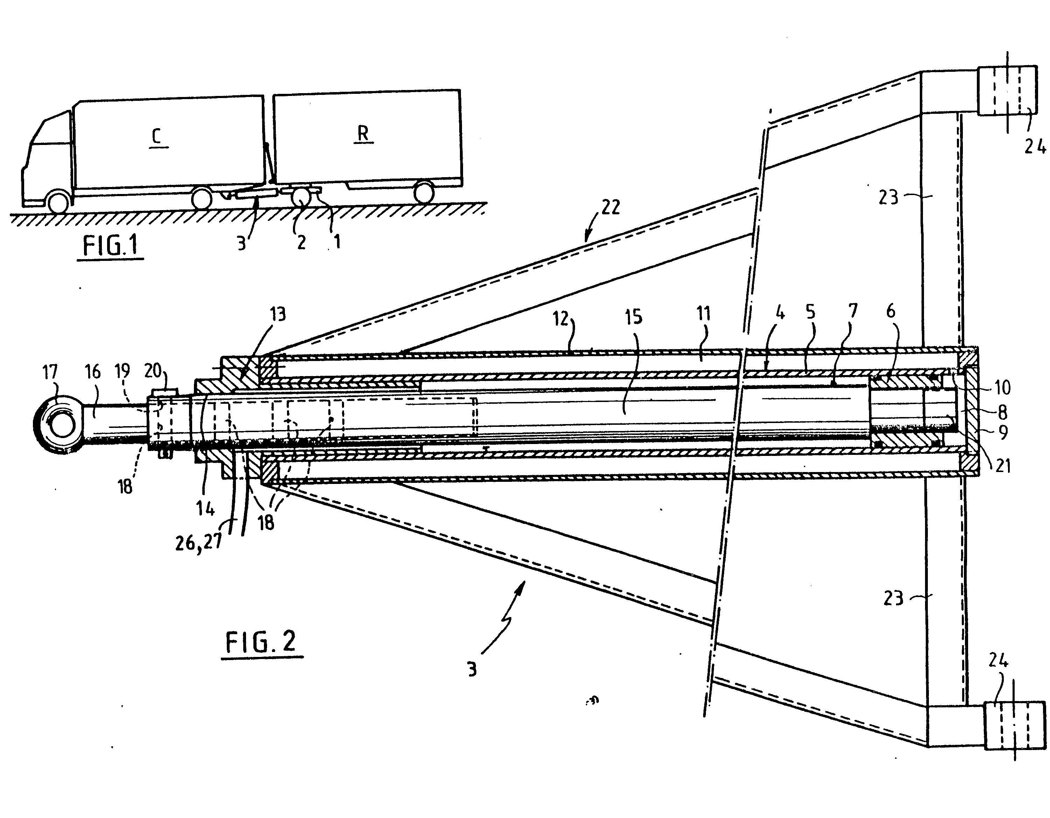

L'ensemble routier que l'on peut voir sur la figure 1 se compose d'un camion C à l'arrière duquel est attelée une remorque R comportant un train avant orientable 1 pourvu de roues 2 et d'un dispositif d'attelage extensible 3 conforme à l'invention.

Ce dispositif d'attelage permet de maintenir l'avant de la remorque à environ une trentaine de centimètres de l'arrière du camion lorsque l'ensemble routier se déplace en ligne droite. Il permet en outre d'augmenter automatiquement l'espacement entre le camion et la remorque dès que ceux-ci forment un angle déterminé entre eux, afin d'éviter qu'ils se heurtent dans les virages.

Comme on peut le voir sur la figure 2, le dispositif d'attelage 3 comprend tout d'abord un vérin hydraulique 4 dont le cylindre 5 est divisé par un piston 6 en une chambre annulaire antérieure 7 contenant un fluide hydraulique tel que de l'huile et une chambre postérieure ou cavité 8 contenant un gaz sous pression tel que de l'air ou de l'azote.

L'extrémité postérieure du cylindre 5 est fermée par un bouchon 9 et comporte des orifices 10 faisant communiquer la chambre postérieure 8 avec un compartiment annulaire ou réserve 11 ménagé entre le cylindre 5 et un tube extérieur 12 disposé coaxialement à celui-ci. L'extrémité antérieure du cylindre est quant à elle fermée par une pièce 13 partiellement insérée dans la chambre antérieure 7, cette pièce constituant un palier 14 pour la tige de piston 15 du vérin 4.

L'extrémité libre de la tige de piston 15 comporte un trou borgne dans lequel est inséré un tenon 16 se terminant par un anneau d'accrochage 17 destiné à coopérer avec un crochet (non représenté) prévu sur le camion. Le tenon 16 comporte plusieurs perçages parallèles 18, quatre dans l'exemple représenté, susceptibles d'être alignés sélectivement avec un perçage 19 prévu à l'extrémité libre de la tige de piston 15, afin de livrer passage à une goupille 20. On conçoit aisément que la longueur de la partie saillante du tenon peut être modifiée en introduisant la goupille 20 dans le perçage 19 et l'un des perçages 18.

On notera ici que le piston 6 porte à son extrémité postérieure un prolongement axial 21 légèrement espacé du bouchon 9 lorsque la tige de piston 15 est complètement rétractée dans le cylindre 5. Ainsi, le fluide sous pression contenu dans la chambre postérieure 8 constitue un amortisseur pneumatique lorsque, la tige de piston étant dans sa position complètement rétractée, le camion exerce un effort de poussée intense sur la remorque.

On notera également que le vérin 4 et le tube 12 constituent l'élément axial d'une flèche d'attelage triangulée 22 dont l'élément transversal postérieur 23 porte deux manchons de liaison 24 destinés à être retenus entre les ailes de deux chapes (non représentées) solidaires de la partie tournante de la couronne à billes (connue en soi) du train avant 1 de la remorque.

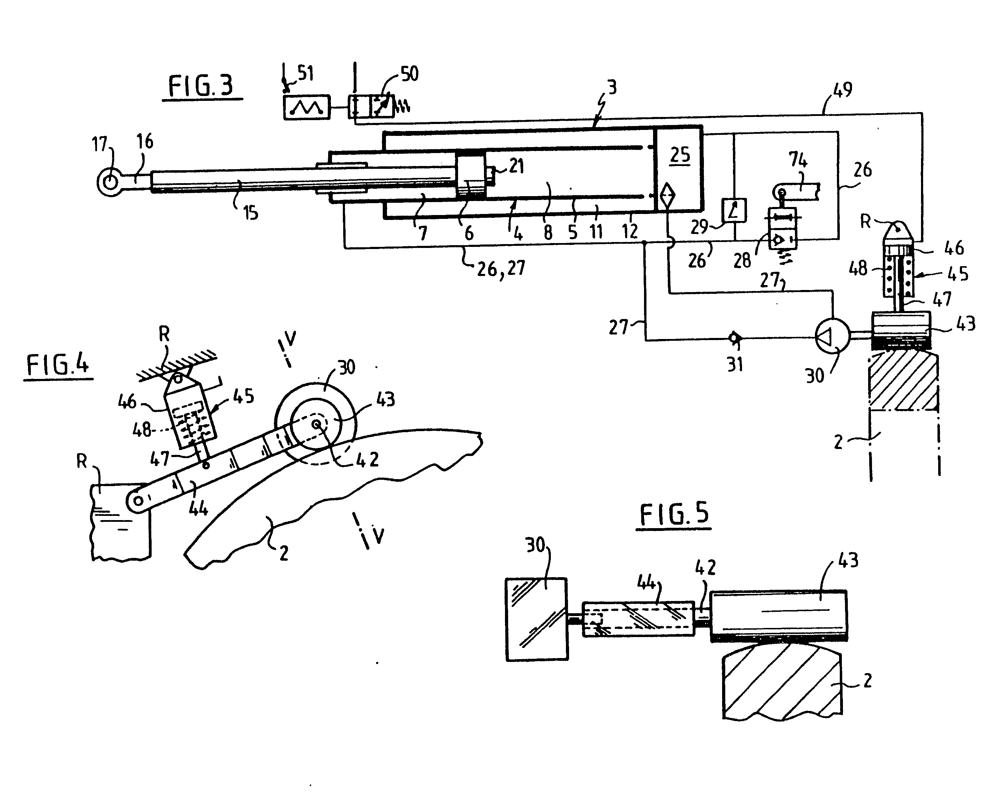

Comme le montre par ailleurs la figure 3, le dispositif d'attelage 3 comporte également un circuit hydraulique comprenant un réservoir 25 relié à la chambre antérieure 7 du cylindre 5 par l'intermédiaire de deux canalisations 26, 27, la première comportant un clapet 28 normalement fermé et une soupape de sécurité 29 montée en parallèle avec le clapet 28, tandis que la seconde comporte une pompe hydraulique 30 et un clapet anti-retour 31.

On précisera ici que la soupape de sécurité 29 constitue un amortisseur hydraulique en s'ouvrant lorsque le camion exerce sur la remorque un effort de traction supérieur à sa pression de tarage.

Lorsqu'on ouvre le clapet 28, le gaz sous pression contenu dans la chambre postérieure 8 et le compartiment 11 refoule dans le réservoir 25 le fluide hydraulique contenu dans la chambre antérieure 7 et provoque ainsi l'extension de la tige de piston 15. Mais lorsqu'on actionne la pompe 30, celle-ci refoule du fluide dans la chambre antérieure et provoque la rétraction de la tige de piston 15 à l'encontre de l'action du gaz sous pression.

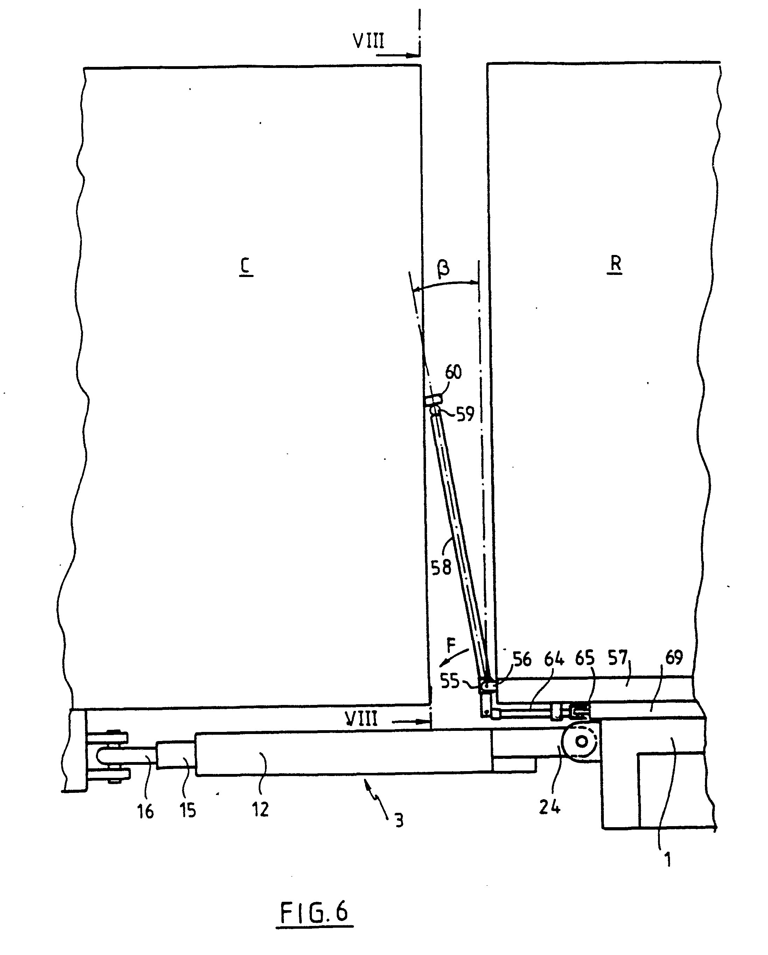

En se référant en particulier aux figures 4 et 5, on constate que l'arbre d'entraînement de la pompe hydraulique 30 est solidaire de l'une des extrémités d'un axe 42 portant un galet 43 à son autre extrémité. L'axe 42 est monté à rotation à l'une des extrémités d'un bras 44 dont l'autre extrémité est articulée sur la remorque. Quant au galet 43, il est parallèle et adjacent à la bande de roulement de l'une des roues 2 du train avant de la remorque.

Un vérin pneumatique 45 dont le cylindre 46 et la tige de piston 47 sont respectivement articulés sur la remorque et sur le bras 44 est prévu pour faire pivoter ce dernier entre une position active dans laquelle il applique le galet 43 contre la roue 2 et une position inactive dans laquelle il l'en éloigne.

Comme on peut par ailleurs le voir sur la figure 3, la chambre côté tige du vérin 45 renferme un ressort hélicoïdal 48 destiné à rappeler le bras 44 dans sa position inactive, tandis que la chambre côté fond est reliée par une conduite 49 à un électro-distributeur à deux positions 50, celui-ci étant lui-même relié à une source d'air comprimé (non représentée) et susceptible d'être excité par l'intermédiaire d'un interrupteur de position 51.

Lorsqu'on ferme l'interrupteur 51, le tiroir de l'électro-distributeur 50 relie la chambre côté fond du vérin pneumatique 45 à la source d'air comprimé. La tige de piston 47 sort alors du cylindre 46 au fur et à mesure que l'air comprimé remplit la chambre côté fond et, ce faisant, elle déplace le bras 44 vers sa position active pour permettre au galet 43 de venir contre la roue 2. A condition bien entendu que la remorque se déplace, le galet est entraîné par la roue 2 dès qu'il vient contre elle, et il entraîne ainsi à son tour la pompe 30 qui peut donc refouler du fluide hydraulique dans la chambre antérieure 7 du vérin hydraulique 4 pour rétracter la tige de piston 15 de ce dernier.

Par contre, lorsqu'on ouvre l'interrupteur 51, le tiroir de l'électro-distributeur 50 relie la chambre côté fond du vérin pneumatique 45 à l'atmosphère, tandis que le ressort 48 rétracte la tige de piston 47 dans le cylindre 46 et ramène le bras 44 dans sa position inactive. Le galet 43, dès qu'il n'est plus au contact de la roue 2, cesse donc d'entraîner la pompe 30.

Le mode d'entraînement de la pompe hydraulique 30 pourrait bien entendu être différent de celui qui est représenté sur les figures 3 à 5. Ainsi, on ne sortirait pas du cadre de la présente invention en utilisant le moteur du camion pour entraîner en permanence la pompe hydraulique, et une électro-valve commandée par l'interrupteur 51 pour envoyer le fluide hydraulique dans la chambre antérieure 7 du vérin 4.

De même, le galet 43 pourrait être maintenu en permanence contre la roue 2 sous l'action d'un ressort remplaçant le vérin pneumatique 45, le circuit hydraulique étant dans ce cas encore pourvu d'une électro-valve commandée par l'interrupteur 51.

Le vérin pneumatique 45 pourrait également être remplacé par un électro-aimant excité par l'interrupteur 51 à l'encontre de l'action d'un ressort de rappel.

On va maintenant décrire les moyens de détection qui sont visibles sur les figures 6 à 9.

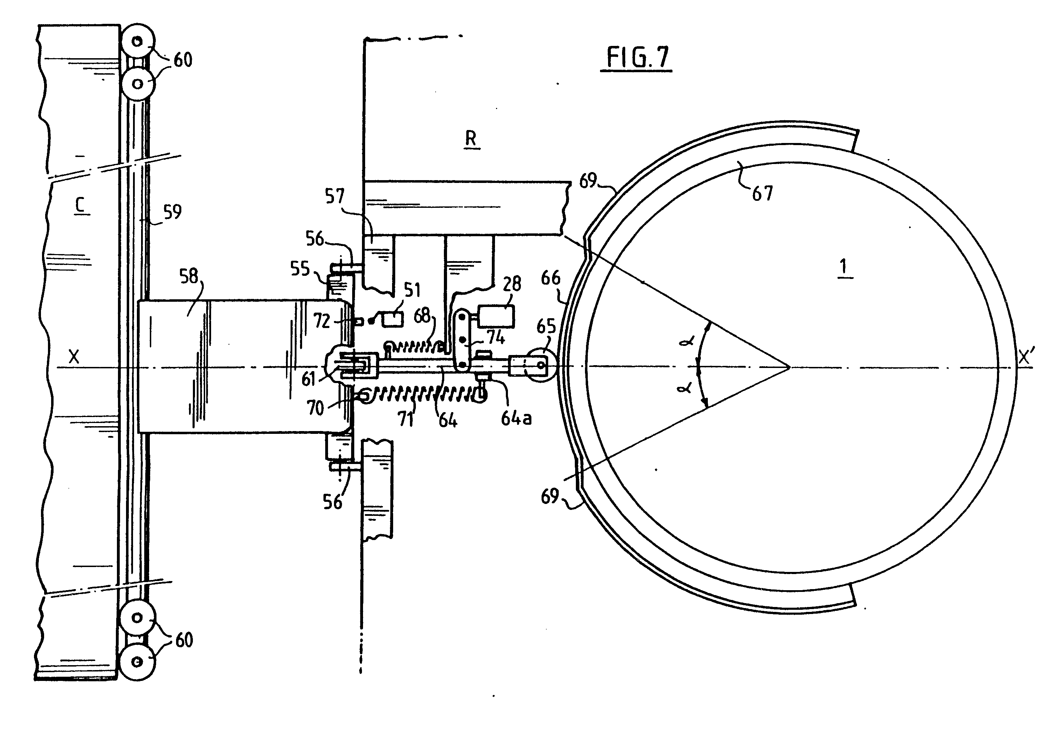

Ces moyens comprennent un support 55 prenant appui sur deux paliers 56 fixés sur le côté transversal avant du châssis 57 de la remorque R, à égale distance de l'axe longitudinal XX' de celle-ci (voir en particulier la figure 7).

Une plaque 58 dirigée vers le haut et fixée par son extrémité inférieure sur le support 55 se termine par une tringle transversale 59 parallèle au côté transversal arrière du camion, cette tringle comportant à ses deux extrémités (qui s'avancent sensiblement jusqu'aux côtés verticaux en regard du camion et de la remorque) des galets 60 destinés à limiter les forces de frottement de la tringle 59 contre l'arrière du camion pendant le déplacement de l'ensemble routier.

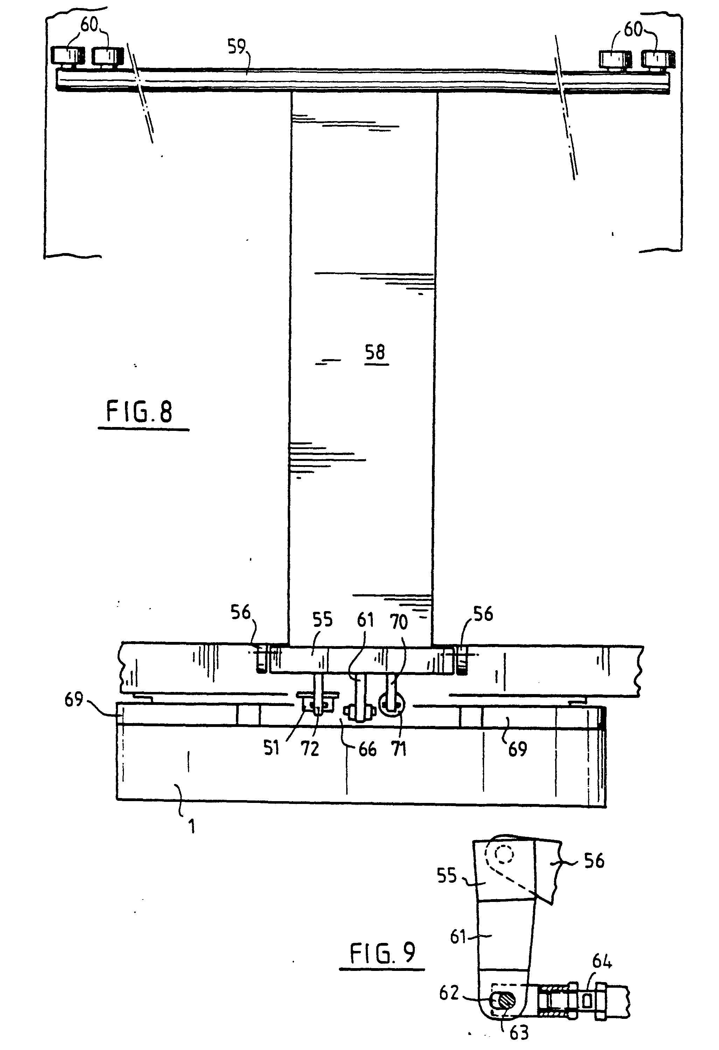

Une patte 61 située sur l'axe longitudinal XX' de la remorque est fixée sur la face inférieure du support 55. Comme le montre la figure 9, cette patte est pourvue à son extrémité libre d'une ouverture oblongue 62 recevant un axe 63 porté par l'extrémité antérieure d'un bras horizontal 64 dont l'extrémité postérieure est pourvue d'un galet de guidage 65 (voir la figure 9). Le bras 64 est guidé dans un pallier 64a solidaire du châssis 57 tandis que le galet 65 prend appui contre une surface circulaire 66 solidaire de et coaxiale avec la partie tournante de la couronne à billes 67 (connue en soi) du train avant 1 et est maintenu contre la surface 66 par un ressort 68 tendu entre le bras 64 et le châssis 57 de la remorque.

La surface circulaire 66 comporte deux saillies 69 formant chacune un angle α avec l'axe longitudinal de la remorque lorsque le camion et la remorque sont alignés, et dont la fonction ressortira de la description donnée ci-après.

Sur sa face inférieure, le support 55 porte une seconde patte 70 reliée au châssis 57 de la remorque par l'intermédiaire d'un ressort 71 visible sur la figure 7. Sous l'action de ce ressort, le support 55 est donc sollicité dans le sens de la flèche F visible sur la figure 6.

Le support 55 porte également, toujours sur sa face inférieure, une troisième patte 72 positionnée à proximité de l'interrupteur de position 51 dont il a été question ci-dessus.

Un levier 74 monté pivotant sur le châssis 57 de la remorque et articulé sur le bras 64 par l'une de ses extrémités est par ailleurs prévu pour actionner le clapet 28 lorsque le bras 64 est déplacé axialement.

On va maintenant décrire le mode de fonctionnement des moyens de détection qui viennent d'être présentés.

Lorsque le camion C et la remorque R sont alignés, la plaque 58 forme avec la normale l'angle β visible sur la figure 6. Pendant ce temps, l'interrupteur 51 et le clapet 28 ne sont pas actionnés et la tige de piston 15 du vérin hydraulique demeure dans sa position rétractée.

Supposons maintenant que le camion et la remorque forment un angle entre eux. Sous l'action des galets 60 qui sont en appui contre le côté transversal arrière du camion, l'angle β formé par la plaque 58 avec la normale diminue et le support 55 pivote à l'encontre de l'action du ressort 71 dans le sens contraire de la flèche F, ce qui contraint le bras 64 à se déplacer axialement en direction du camion. Le levier 74 ouvre alors le clapet 28 qui permet la sortie de la tige de piston 15 du vérin hydraulique.

Puis, comme la distance entre le camion et la remorque augmente, l'angle formé par la plaque 58 avec la normale redevient égal à l'angle β et le levier 74 referme le clapet 28.

On constate ainsi que l'allongement du dispositif d'attelage est fonction de la grandeur de l'angle formé par le camion et la remorque.

Supposons maintenant que le camion et la remorque, après s'être éloignés l'un de l'autre, redeviennent alignés. Comme le ressort 71 sollicite le support dans le sens de la flèche F, l'angle formé par la plaque 58 avec la normale devient dans ce cas supérieur à l'angle β. Dans la limite du débattement permis par l'ouverture oblongue 62 (figure 9), le support 55 pivote alors jusqu'à ce que la troisième patte 72 vienne fermer l'interrupteur 51. Dès que celui-ci est fermé, l'électro-distributeur 50 envoie de l'air comprimé dans la chambre côté fond du vérin pneumatique 45, ce qui permet au galet 43 de venir contre la roue 2 et d'entraîner la pompe 30 qui commande alors la rétraction de la tige de piston 15 du vérin hydraulique 4 jusqu'à ce que l'angle formé par la plaque 58 avec la normale redevienne égal à l'angle β.

Lorsque le dispositif d'attelage 3 pivote d'un angle supérieur à l'angle α visible sur la figure 7, l'une des saillies 69 qui sont solidaires de la partie tournante de la couronne à billes du train avant vient devant le galet 65 et contraint le bras 64 à se déplacer en direction du camion. Pendant ce temps, le support 55 pivote dans le sens inverse de la flèche F, jusqu'à ce que la plaque 58 et la tringle transversale 59 viennent pratiquement contre le côté transversal avant de la remorque.

L'application de la plaque 58 et de la tringle 59 contre l'avant de la remorque est indispensable dans les virages très prononcés. Pendant la négociation de ceux-ci, il peut en effet arriver que l'arrière du camion ne soit plus devant le côté transversal avant de la remorque et ne puisse plus servir de butée à la plaque et à la tringle. Dans ce cas, celles-ci se trouveraient libres et s'inclineraient vers l'avant, mais risqueraient d'être endommagées par le camion lorsqu'il revient dans l'alignement de la remorque.

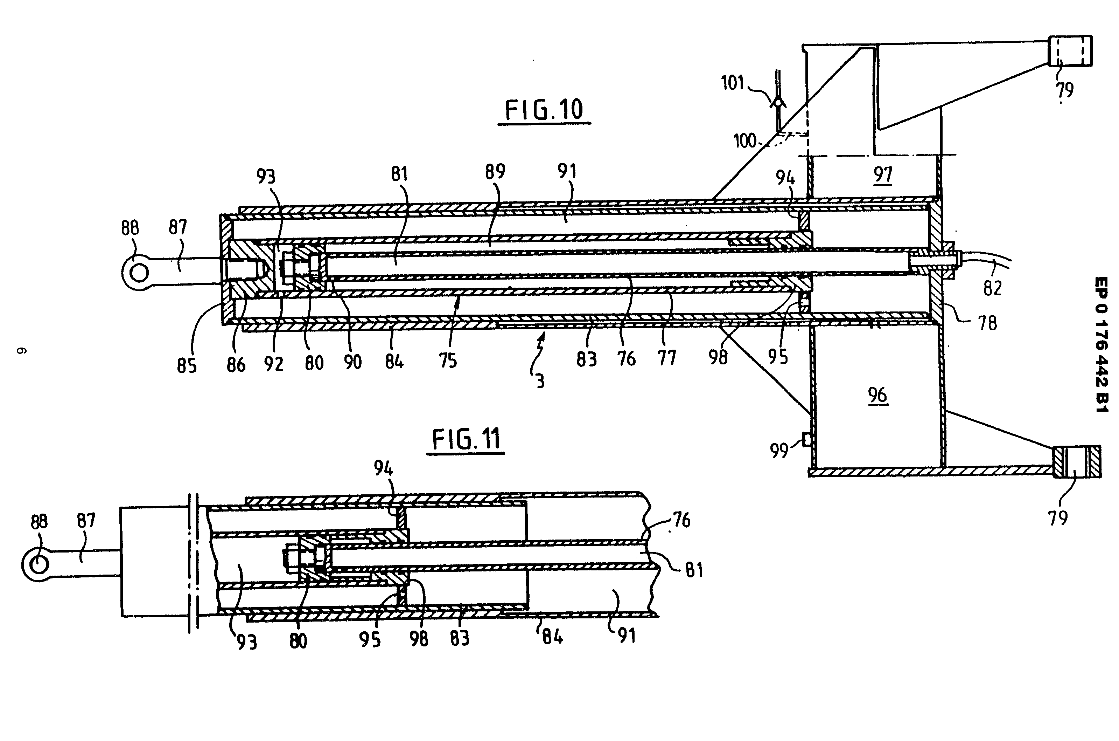

Dans le mode de réalisation représenté sur les figures 10 et 11, le dispositif d'attelage 3 comprend un vérin hydraulique 75 dont la tige de piston 76 est fixe et dont le cylindre 77 est déplaçable axialement le long de la tige de piston 76.

La tige de piston 76 est reliée par son extrémité postérieure à une poutre transversale 78 comportant deux manchons 79 permettant de la relier à la partie tournante de la couronne à billes du train avant de la remorque. Elle est en outre pourvue d'un piston 80 à son extrémité antérieure et d'un canal axial 81 dont l'extrémité postérieure est reliée par un conduit 82 au circuit hydraulique représenté sur la figure 3.

Quant au cylindre 77, il est doublé extérieurement par une enveloppe cylindrique 83 montée coulissante dans un tube extérieur 84 coaxial à la tige de piston 76, ce tube étant solidaire de la poutre 78 et perpendiculaire à celle-ci.

A son extrémité antérieure, l'enveloppe 83 est obturée par une paroi frontale 85 reliée à l'extrémité antérieure du cylindre 77 par l'intermédiaire d'une pièce de liaison 86.

Un tenon 87 se terminant par un anneau d'accrochage 88 fait saillie sur la paroi frontale 85 pour permettre l'accrochage de la remorque à l'arrière d'un camion.

La tige de piston 76 et le cylindre 77 ménagent entre eux une chambre annulaire 89 communiquant avec l'extrémité antérieure du canal 81 par l'intermédiaire de perçages 90 réalisés dans la paroi de la tige de piston. Lorsque la tige de piston 76 est complètement rétractée dans le cylindre, celui-ci ménage avec l'enveloppe 83 un compartiment annulaire 91 dont l'extrémité antérieure communique, par l'intermédiaire de perçages 92 réalisés dans le cylindre 77, avec une chambre 93 s'étendant entre la pièce 86 et le piston 80.

Le compartiment 91 comporte une paroi annulaire 94 pourvue de perçages 95 et communique avec deux réservoirs d'air comprimé 96, 97 s'étendant de part et d'autre du tube extérieur 84, le long de la poutre 78. Lorsque la tige de piston 76 est partiellement ou totalement sortie du cylindre, le compartiment 91 s'étend entre la tige de piston 76 et le tube extérieur 84 (voir la figure 11).

On notera ici que la paroi annulaire 94, qui est solidaire de l'enveloppe 83 et d'un bouchon annulaire 98 fermant l'extrémité postérieure du cylindre 77, constitue un élément de renfort pour le vérin hydraulique 75.

On notera également que le compartiment 91, la chambre 93 et les réservoirs 96, 97 contiennent de préférence de l'air comprimé sous une pression relativement faible, les réserves 96, 97 comportant une valve 99 permettant de les relier aux accumulateurs d'air comprimé disponibles dans tous les garages, ainsi qu'une conduite 100 pourvue d'un clapet anti-retour 101 permettant de les relier au réservoir d'air comprimé (non représenté) de la remorque.

Le fonctionnement du vérin hydraulique 75 est évident et n'a pas à être décrit ici. On indiquera simplement que lorsque le levier 74 (figure 7) ouvre le clapet 28, l'air comprimé contenu dans le compartiment 91, la chambre 93 et les réservoirs 96, 97 déplacent le cylindre 77, l'enveloppe 83 et le tenon 87 en direction du camion en refoulant le fluide hydraulique contenu dans le canal axial 81 et la chambre annulaire 89 dans le réservoir 25 (figure 3) du circuit hydraulique.

Par contre, lorsqu'on actionne la pompe hydraulique 30, celle-ci refoule du fluide hydraulique dans le canal axial 81 et la chambre annulaire 89, provoquant ainsi le recul du cylindre 77 sur la tige de piston 76 à l'encontre de l'action de l'air comprimé.

Pour être complet, on précisera à toutes fins utiles que des joints d'étanchéité sont prévus entre la tige de piston 76 et le bouchon 98 prévu à l'extrémité postérieure du cylindre 77, ainsi qu'entre l'enveloppe 83 et l'extrémité antérieure du tube extérieur 84.

On notera également que l'air comprimé utilisé pour solliciter le tenon 87 en direction du camion pourrait être remplacé par un ressort comprimé s'étendant entre le cylindre 77 et l'enveloppe 83 et dont les extrémités s'appuieraient respectivement contre la paroi frontale 85 et la poutre 78.

Dans ce qui précède, on a décrit deux modes de réalisation d'un dispositif d'attelage extensible reliant une remorque à l'arrière d'un camion. Il va de soi que l'on ne sortirait pas du cadre de la présente invention si l'on apportait des modifications d'ordre secondaire à ces exemples de réalisation pour relier une semi-remorque à un tracteur.

Il va de soi également que rien ne s'oppose à ce que les dispositifs d'attelage conformes à la présente invention puissent être utilisés pour relier des véhicules ferroviaires.

## Revendications

1. Véhicule comportant un châssis (57) et un dispositif d'attelage extensible (3) dont l'extrémité antérieure est pourvue d'un dispositif d'accrochage (17 ; 88) apte à être relié à l'arrière d'un autre véhicule, le dispositif d'attelage (3) étant du type comprenant un vérin hydraulique (4 ; 75) comportant un cylindre (5 ; 77), un piston (6 ; 80), un tige de piston (15 ; 76) et une chambre (7 ; 81, 89) contenant un fluide hydraulique ; et un circuit hydraulique comportant un réservoir (25) relié à la chambre (7 ; 81, 89) du vérin (4 ; 75) par l'intermédiaire de deux canalisations (26, 27) dont l'une comporte une pompe hydraulique (30), caractérisé en ce que l'autre canalisation comporte un clapet normalement fermé (28) et en ce que le dispositif d'attelage extensible comprend en outre des organes élastiques sollicitant le dispositif d'accrochage (17 ; 88) en direction de l'autre véhicule ; des moyens de détection pour commander l'ouverture du clapet (28) lorsque les deux véhicules, en position attelée, forment entre eux un angle supérieur à un angle déterminé, et permettre aux organes élastiques de faire avancer le dispositif d'accrochage (17 ; 88) en direction de l'autre véhicule en refoulant dans le réservoir (25) le fluide hydraulique contenu dans la chambre (7 ; 81, 89) ; et des moyens de commande pour actionner la pompe hydraulique (30) afin que le fluide hydraulique refoulé par celle-ci dans la chambre (7 ; 81, 89) fasse reculer le dispositif d'accrochage (17 ; 88) à l'encontre de l'action des organes élastiques.

2. Véhicule selon la revendication 1, caractérisé en ce que les organes élastiques sont constitués par un gaz sous pression contenu dans une cavité (8 ; 93) séparée de la chambre (7 ; 81, 89) par le piston (6 ; 80) et alimentée en gaz sous pression à partir d'une réserve (11 ; 91, 96, 97).

3. Véhicule selon la revendication 2, caractérisé en ce que la cavité (8) est située entre le piston (6) et l'extrémité postérieure du cylindre (5) tandis que la réserve (11) est constituée par un compartiment annulaire (11) situé entre le cylindre (5) et un tube extérieur (12) coaxial à celui-ci.

4. Véhicule selon la revendication 1, caractérisé en ce que la tige de piston (15) est déplaçable axialement par rapport au cylindre (5) et porte le dispositif d'accrochage (17) et le piston (6) respectivement à ses extrémités antérieure et postérieure, la chambre (7) étant en avant du piston (6).

5. Véhicule selon la revendication 4, caractérisé en ce que le piston (6) porte à son extrémité postérieure un prolongement axial (21) ménageant un espace avec l'extrémité postérieure du cylindre (5) lorsque la tige de piston (15) est complètement rétractée dans celui-ci.

6. Véhicule selon l'une quelconque des revendications 1 à 5, caractérisé en ce que le dispositif d'accrochage (17) est prévu à l'extrémité antérieure d'un tenon (16) enfilé dans l'extrémité libre de la tige de piston (15) et comportant des moyens (18) pour le relier à celle-ci dans l'une quelconque de plusieurs positions décalées axialement.

7. Véhicule selon la revendication 1, caractérisé en ce que la tige de piston (76) porte le piston (80) à son extrémité antérieure tandis que le cylindre (77), qui est déplaçable axialement par rapport à elle, est doublé extérieurement par une enveloppe cylindique (82) montée coulissante dans un tube extérieur (84) coaxial à la tige de vérin (76), l'enveloppe (83) étant solidaire de l'extrémité antérieure du cylindre (77) et obturée à son extrémité antérieure par une paroi frontale (85) portant le dispositif d'accrochage (88), la chambre (81, 89) étant en arrière du piston (80).

8. Véhicule selon la revendication 7, caractérisé en ce que la chambre (81, 89) est constituée par un canal axial (81) ménagé dans la tige de piston (76) et par une chambre annulaire (89) ménagée entre la tige de piston (76) et le cylindre (77).

9. Véhicule selon la revendication 3, caractérisé en ce que la cavité (93) est située entre le piston (80) et l'extrémité antérieure du cylindre (77) tandis que la réserve (91, 96, 97) est constituée par un compartiment annulaire (91) s'étendant entre le cylindre (77) et l'enveloppe (83) et éventuellement entre la tige de piston (76) et le tube extérieur (84) et par deux réservoirs (96, 97).

10. Véhicule selon la revendication 9, caractérisé en ce que les réservoirs (96, 97) comportent des moyens (99, 100, 101) pour les relier à une source de gaz sous pression installée au sol et/ou sur le véhicule.

11. Véhicule selon l'une quelconque des revendications précédentes, caractérisé en ce que le dispositif d'attelage (3) se présente sous la forme d'une flèche triangulée comportant un élément axial constitué par le vérin hydraulique (4 ; 75) et le tube extérieur (12 ; 84).

12. Véhicule selon l'une quelconque des revendications précédentes, caractérisé en ce que le circuit hydraulique comprend une soupape de sécurité (29) montée en parallèle avec le clapet normalement fermé (28).

13. Véhicule selon l'une quelconque des revendications précédentes comprenant un train avant (1) monté sur des roues (2), une couronne à billes (67) ayant une partie fixe solidaire du châssis (57) et une partie tournante solidaire du train avant (1), caractérisé en ce que les moyens de détection comprennent un support (55) monté pivotant sur le châssis (57) dudit véhicule, autour d'un axe perpendiculaire à l'axe longitudinal (XX') de celui-ci ; une plaque (58) dirigée vers le haut et formant un angle déterminé (β) avec la verticale lorsque les deux véhicules sont alignés, l'extrémité inférieure de cette plaque (58) étant solidaire du support (55), tandis que son extrémité supérieure porte une tringle transversale (59) en contact avec l'arrière de l'autre véhicule ; un bras horizontal (64) dont l'une des extrémités est articulée sur le support (55) et dont l'autre extrémité porte un galet de guidage (65) en appui contre une surface circulaire (66) solidaire de et coaxiale avec la partie tournante de la couronne à billes (67) du train avant (1), ce bras (64) étant situé sur l'axe longitudinal (XX') dudit véhicule et déplaçable le long de cet axe ; des moyens (71) pour rappeler la tringle transversale (59) contre l'arrière de l'autre véhicule ; et une tringlerie (74) interposée entre le bras (64) et le clapet (28) pour ouvrir ce dernier lorsque la plaque (58) forme avec la verticale un angle inférieur à l'angle déterminé (β).

14. Véhicule selon la revendication 13, caractérisé en ce que la surface circulaire (66) comporte deux saillies (69) positionnées pour venir contre le galet de guidage (65) dès que le dispositif d'attelage (3) forme dans l'un ou l'autre sens avec l'axe longitudinal (XX') dudit véhicule un angle de l'ordre de 20°.

15. Véhicule selon la revendication 13 ou 14 caractérisé en ce que le support (55) porte une patte (72) conformée pour actionner les moyens de commande de la pompe hydraulique (30) lorsque la plaque (58) forme avec la verticale un angle supérieur à l'angle déterminé (β).

16. Véhicule selon l'une quelconque des revendications 13 à 15, caractérisé en ce que les moyens de commande de la pompe hydraulique comprennent un bras (44) supportant à rotation un axe (42) sur lequel sont calés l'arbre d'entraînement de la pompe hydraulique (30) et un galet (43) parallèle et adjacent à l'une des roues (2) du train avant (1), un vérin pneumatique (45) dont la tige de piston (47) est articulée sur le bras (44) pour le déplacer entre une position active dans laquelle il applique le galet (43) contre la roue (2) et une position inactive dans laquelle il l'en éloigne, un circuit pneumatique comprenant une conduite (49) reliant la chambre côté fond du vérin pneumatique (45) à un électro-distributeur à deux positions (50) relié à une source d'air comprimé, et un interrupteur (51) pour actionner l'électro-distributeur (50) de telle sorte qu'il relie la chambre côté fond à l'atmosphère lorsque la tige de piston (15 ; 76) du vérin hydraulique (4 ; 75) est complètement rétractée et qu'il la relie à la source d'air comprimé lorsque la tige de piston (15 ; 76) du vérin hydraulique (4 ; 75) n'est pas complètement rétractée.

17. Véhicule selon la revendication 16, caractérisé en ce que la chambre côté tige du vérin pneumatique (45) renferme un ressort (48) sollicitant le bras (44) dans sa position inactive lorsque la chambre côté fond est reliée à l'atmosphère.

## Claims

1. A vehicle comprising a chassis (57) and an extensible hitching device (3) whose front end is provided with a coupling device (17 ; 88) adapted to be connected to the rear of another vehicle the hitching device (3) being of the type comprising a hydraulic actuator (4 ; 75) comprising a cylinder (5 ; 77), a piston (6, 80), a piston rod (15 ; 76) and a chamber (7 ; 81, 89) containing a hydraulic fluid ; and a hydraulic circuit comprising a reservoir (25) connected to the chamber (7 ; 81, 89) of the actuator (4 ; 75) through two ducts (26, 27) of which one comprises a hydraulic pump (30), characterized in that the other duct comprises a normally closed valve (28), and in that the extensible hitching device further includes resilient means urging the coupling device (17 ; 88) in the direction of the other vehicle ; detection means for controlling the opening of the valve (28) when the two vehicles, in the hitched position, form therebetween an angle greater than a given angle and allow the resilient means to extend the coupling device (17 ; 88) in the direction of the other vehicle while driving back into the reservoir (25) the hydraulic fluid contained in the chamber (7 ; 81, 89) ; and control means for actuating the hydraulic pump (30) so that the hydraulic fluid driven back into the chamber (7 ; 81, 89) causes the coupling device (17 ; 88) to retract against the action of the resilient means.

2. Vehicle according to claim 1, characterized in that the resilient means are formed by a pressurized gas contained in a cavity (8 ; 93) separated from the chamber (7 ; 81, 89) by the piston (6, 80) and fed with pressurized gas from a reserve (11 ; 91, 96, 97).

3. Vehicle according to claim 2, characterized in that the cavity (8) is situated between the piston (6) and the rear end of the cylinder (5) whereas the reserve (11) is formed by an annular compartment (11) situated between the cylinder (5) and an outer tube (12) coaxial therewith.

4. Vehicle according to claim 1, characterized in that the piston rod (15) is movable axially with respect to the cylinder (5) and comprises the coupling device (17) and the piston (6) respectively at its front and rear ends, the chamber (7) being in front of the piston (6).

5. Vehicle according to claim 4, characterized in that the piston (6) comprises at its rear end an axial extension (21) forming a space with the rear end of the cylinder (5) when the piston rod (15) is completely retracted therein.

6. Vehicle according to any of claims 1 to 5, characterized in that the coupling device (17) is provided at the front end of a tenon (16) fitted into the free end of the piston rod (15) and comprising means (18) for connecting it thereto in any one of several axially offset positions.

7. Vehicle according to claim 1, characterized in that piston rod (17) comprises the piston (80) at its front end whereas the cylinder (77), which is movable axially with respect thereto, is encased outwardly by a cylindrical casing (83) slidably mounted in an outer tube (84) coaxial with the actuator rod (76), the casing (83) being integral with the front end of the cylinder (77) and closed at its front end by a front wall (85) supporting the coupling device (88), the chamber (81, 89) being at the rear of the piston (80).

8. Vehicle according to claim 7, characterized in that the chamber (81, 89) is formed by an axial channel (81) formed in the piston rod (76) and by an annular chamber (89) formed between the piston rod (76) and the cylinder (77).

9. Vehicle according to claim 3, characterized in that the cavity (93) is situated between the piston (80) and the front end of the cylinder (77) whereas the reserve (91, 96, 97) is formed by an annular compartment (91) extending between the cylinder (77) and the casing (83) and possibly between the piston rod (76) and the outer tube (84) and by two reservoirs (96, 97).

10. Vehicle according to claim 9, characterized in that the reservoirs (96, 97) comprise means (99, 100, 101) for connecting them to a pressurized gas source installed on the ground and/or on the vehicle.

11. Vehicle according to any of the preceding claims, characterized in that the hitching device (3) is in the form of a triangulated beam comprising an axial element formed by the hydraulic actuator (4 ; 75) and the outer tube (12 ; 84).

12. Vehicle according to any of the preceding claims, characterized in that the hydraulic circuit comprises a safety valve (29) mounted in parallel with the normally closed valve (28).

13. Vehicle according to any of the preceding claims, comprising a front wheel unit (1) mounted on wheels (2), a ball bearing ring (67) having a fixed part secured to the chassis (57) and a rotary part secured to the front wheel unit (1), characterized in that the detection means comprise a support (55) mounted for pivoting on the chassis (57) of said vehicle, about an axis perpendicular to the longitudinal axis (XX') thereof ; a plate (58) directed upwardly and forming a given angle ($\beta$) with the vertical when the two vehicles are aligned, the lower end of this plate (58) being secured to the support (55), whereas its upper end supports a transverse rod (59) in contact with the rear of the other vehicle ; a horizontal arm (64) one of whose ends is articulated to the support (55) and the other end of which comprises a guide roller (65) bearing against a circular surface (66) integral and coaxial with the rotary part of the ball bearing ring (67) of the front wheel unit (1), this arm (64) being situated on the longitudinal axis (XX') of said vehicle and movable along this axis means (71) for returning the transverse rod (59) against the rear of the other vehicle ; and a linkage (74) interposed between the arm (64) and the valve (28) for opening this latter when the plate (58) forms with the vertical an angle less than the given angle ($\beta$).

14. Vehicle according to claim 13, characterized in that the circular surface (66) comprises two projections (69) positioned so as to come against the guide roller (65) as soon as the hitching device (3) forms in one or other direction an angle of the order of 20° with the longitudinal axis (XX') of said vehicle.

15. Vehicle according to claim 13 or 14, characterized in that the support (55) comprises a lug (72) adapted for actuating the means controlling the hydraulic pump (30) when the plate (58) forms with the vertical an angle greater than the given angle ($\beta$).

16. Vehicle according to any of claims 13 to 15, characterized in that the means controlling the hydraulic pump comprise an arm (44) rotatably supporting a shaft (42) on which are fixed the drive shaft of the hydraulic pump (30) and a roller (44) parallel to and adjacent one of the wheels (2) of the front wheel unit (1), a pneumatic actuator (45) whose piston rod (47) is articulated to the arm (44) for moving it between an active position in which it applies the roller (43) against the wheel (2) and an inactive position in which it is moved away therefrom, a pneumatic circuit comprising a duct (49) connecting the bottom side chamber of the pneumatic actuator (45) to a two position electro-distributor (50) connected to a compressed air source, and a switch (51) for actuating the electro-distributor (50) so that it connects the bottom side chamber to the atmosphere when the piston rod (15 ; 76) of the hydraulic actuator (4 ; 75) is completely retracted and so that it connects it to the compressed air source when the piston rod (15 ; 76) of the hydraulic actuator (4 ; 75) is not completely retracted.

17. Vehicle according to claim 16, characterized in that the rod side chamber of the pneumatic actuator (45) comprises a spring (48) urging the arm (44) into its inactive position when the bottom side chamber is connected to the atmosphere.

**Patentansprüche**

1. Fahrzeug, enthaltend ein Fahrgestell (57) und eine ausfahrbare Zugeinrichtung (3), deren vorderes Ende mit einer Kupplungsvorrichtung (17 ; 88) versehen ist, die zur Anbringung an der Rückseite eines anderen Fahrzeugs bestimmt ist, wobei die Anhängeeinrichtung (3) eine Hydraulikeinrichtung (4 ; 75) enthält, umfassend einen Zylinder (5 ; 77), einen Kolben (6 ; 80), eine Kolbenstange (15 ; 76) und eine Kammer (7 ; 81, 89), die ein Hydraulikfluid enthält ; und einen Hydraulikkreis mit einem Behälter (25), der mit der Kammer (7 ; 81, 89) der Einrichtung (4 ; 75) mittels zweier Leitungen (26, 27) verbunden ist, von denen die eine eine Hydraulikpumpe (30) enthält, dadurch gekennzeichnet, daß die andere Leitung ein normalerweise geschlossenes Rückschlagventil (28) enthält und daß die ausfahrbare Anhängeeinrichtung weiterhin enthält ; elastische Einrichtungen, die die Kupplungsvorrichtung (17 ; 88) in Richtung auf das andere Fahrzeug drücken ; Detektoreinrichtungen, um das Öffnen des Rückschlagventils (28) zu steuern, wenn die zwei Fahrzeuge in gekuppeltem Zustand zwischen sich einen Winkel bilden, der größer als ein vorbestimmter Winkel ist, und um den elastischen Einrichtungen zu ermöglichen, die Kupplungsvorrichtung (17 ; 88) in Richtung auf das andere Fahrzeug vorzuschieben, indem in dem Behälter (25) das in der Kammer (7 ; 81, 89) enthaltene Hydraulikfluid aufgestaut wird ; und Steuereinrichtungen, um die Hydraulikpumpe (30) zu betätigen, damit das durch sie in der Kammer (7 ; 81, 89) aufgestaute Hydraulikfluid die Kupplungsvorrichtung (17 ; 88) gegen die Kraft der elastischen Einrichtungen zurückzieht.

2. Fahrzeug nach Anspruch 1, dadurch gekennzeichnet, daß die elastischen Einrichtungen von einem Druckgas gebildet sind, das in einem Hohlraum (8 ; 93) enthalten ist, der von der Kammer (7 ; 81, 89) durch den Kolben (6 ; 80) getrennt ist und aus einer Reserve (11 ; 91, 96, 97) mit Druckgas versorgt ist.

3. Fahrzeug nach Anspruch 2, dadurch gekennzeichnet, daß der Hohlraum (8) zwischen dem Kolben (6) und dem hinteren Ende des Zylinders (5) angeordnet ist, während die Reserve (11) von einer ringförmigen Kammer (11) gebildet wird, die zwischen dem Zylinder (5) und einem zu diesem koaxialen Außenrohr (12) gelegen ist.

4. Fahrzeug nach Anspruch 1, dadurch gekennzeichnet, daß die Kolbenstange (15) in axialer Richtung gegenüber dem Zylinder (5) verschiebbar ist und die Kupplungsvorrichtung (17) und den Kolben (6) an seinem vorderen bzw. hinteren Ende trägt, wobei die kammer (7) vor dem Kolben (6) liegt.

5. Fahrzeug nach Anspruch 4, dadurch gekennzeichnet, daß der Kolben (6) an seinem hinteren Ende eine axiale Verlängerung (21) aufweist, die mit dem hinteren Ende des Zylinders (5) einen Zwischenraum bildet, wenn die Kolbenstange (15) vollständig in den Zylinder zurückgezogen ist.

6. Fahrzeug nach einem der Ansprüche 1 bis 5, dadurch gekennzeichnet, daß die Kupplungsvorrichtung (17) am vorderen Ende eines Zapfens (16) vorgesehen ist, der in das freie Ende der Kolbenstange (15) eingeschraubt ist und der Einrichtungen (18) aufweist, um ihn an diese in einer beliebigen aus mehreren axial versetzten Stellungen festzulegen.

7. Fahrzeug nach Anspruch 1, dadurch gekennzeichnet, daß die Kolbenstange (76) den Kolben (80) an seinem vorderen Ende trägt, während der Zylinder (77), der in axialer Richtung gegenüber ihr verschiebbar ist, außen von einer zylindrischen Umhüllung (83) umgeben ist, die in einem zur Kolbenstange (76) koaxialen Außenrohr (84) verschiebbar montiert ist, wobei die Umhüllung (83) fest mit dem vorderen Ende des Zylinders (77) verbunden und an ihrem vorderen Ende von einer Stirnwand (85) verschlossen ist, die die Kupplungsvorrichtung (88) trägt, wobei die Kammer (81, 89) hinter dem Kolben (80) liegt.

8. Fahrzeug nach Anspruch 7, dadurch gekennzeichnet, daß die Kammer (81, 89) von einem axialen Kanal (81) gebildet ist, der in der Kolbenstange (76) ausgebildet ist, und durch eine ringförmige Kammer (89), die zwischen der Kolbenstange (76) und dem Zylinder (77) ausgebildet ist.

9. Fahrzeug nach Anspruch 3, dadurch gekennzeichnet, daß der Hohlraum (93) zwischen dem Kolben (80) und dem vorderen Ende des Zylinders (77) gelegen ist, während die Reserve (91, 96, 97) durch eine ringförmige Kammer (91), die sich zwischen dem Zylinder (77) und der Umhüllung (83) und ggf. zwischen der Kolbenstange (76) und dem Außenrohr (84) erstreckt, und durch zwei Behälter (96, 97) gebildet ist.

10. Fahrzeug nach Anspruch 9, dadurch gekennzeichnet, daß die Behälter (96, 97) Einrichtungen (99, 100, 101) aufweisen, um sie mit einer Druckgasquelle zu verbinden, die auf dem Boden und/oder über dem Fahrzeug installiert ist.

11. Fahrzeug nach einem der vorhergehenden Ansprüche, dadurch gekennzeichnet, daß die Anhängeeinrichtung (3) sich in Form eines dreieckigen Pfeils darstellt, enthaltend ein axiales Element, das von der Hydraulikeinrichtung (4 ; 75) und dem Außenrohr (12 ; 84) gebildet ist.

12. Fahrzeug nach einem der vorhergehenden Ansprüche, dadurch gekennzeichnet, daß der Hydraulikkreis ein Sicherheitsventil (29) enthält, das parallel zu dem normalerweise geschlossen Rückschlagventil (28) angeordnet ist.

13. Fahrzeug nach einem der vorhergehenden Ansprüche, enthaltend ein auf Rädern (2) gelagertes vorderes Drehgestell (1), ein Kugellager (67) mit einem am Fahrgestell (57) fest angebrachten Abschnitt und einem mit dem Drehgestell (1) fest verbundenen drehenden Abschnitt, dadurch gekennzeichnet, daß die Detektoreinrichtungen enthalten : einen Träger (55), der schwenkbar an dem Fahrgestell (57) des Fahrzeugs um eine Achse angebracht ist, die senkrecht zur Längsachse (XX') desselben verläuft ; eine Platte (58), die nach oben gerichtet ist und einen vorbestimmten Winkel ($\beta$) mit der Vertikalen bildet, wenn die zwei Fahrzeuge gerade ausgerichtet sind, wobei das untere Ende dieser Platte (58) mit dem Träger (55) fest verbunden ist, während ihr oberes Ende eine Querstange (59) trägt, die mit der Hinterseite des anderen Fahrzeugs in Berührung ist ; einen horizontalen Arm (64), von dem das eine Ende an dem Träger (55) angelenkt ist und das andere Ende eine Führungsrolle (65) trägt, die an einer Kreisfläche (66) in Anlage ist, die fest und koaxial mit dem drehbaren Abschnitt des Kugellagers (67) des Drehgestells (1) verbunden ist, wobei dieser Arm (64) auf der Längsachse (XX') des genannten Fahrzeugs gelegen ist und längs dieser Achse verstellbar ist ; Einrichtungen (71), um die Querstange (59) an der Hinterseite des anderen Fahrzeugs in Anlage zu halten ; und ein Gestänge (74), das zwischen dem Arm (64) und dem Rückschlagventil (28) angeordnet ist, um letzteres zu öffnen, wenn die Platte (58) mit der Vertikalen einen Winkel bildet, der kleiner als der vorbestimmte Winkel ($\beta$) ist.

14. Fahrzeug nach Anspruch 13, dadurch gekennzeichnet, daß die Kreisfläche (66) zwei Vorsprünge (69) aufweist, die so angeordnet sind, daß sie an die Führungsrolle (65) in Anlage kommen, sobald die Anhängeeinrichtung (3) in der einen oder anderen Richtung mit der Längsachse (XX') des Fahrzeugs einen Winkel in der Größenordnung von 20° bildet.

15. Fahrzeug nach Anspruch 13 oder 14, dadurch gekennzeichnet, daß der Träger (55) eine Klaue (72) aufweist, die so gestaltet ist, daß sie die Steuereinrichtungen für die Hydraulikpumpe (30) betätigt, wenn die Platte (58) mit der Vertikalen einen Winkel bildet, der größer als der vorbestimmte Winkel (β) ist.

16. Fahrzeug nach einem der Ansprüche 13 bis 15, dadurch gekennzeichnet, daß die Steuereinrichtungen für die Hydraulikpumpe enthalten : einen Arm (44), der drehbar eine Welle (42) hält, an der die Antriebswelle der Hydraulikpumpe (30) und eine Rolle (43) befestigt sind, die parallel und benachbart zu einem der Räder (2) des Drehgestells (1) ist, eine pneumatische Einrichtung (45), von der die Kolbenstange (47) an dem Arm (44) angelenkt ist, um diesen zwischen einer aktiven Stellung, in der er die Rolle (43) gegen das Rad (2) drückt, und einer inaktiven Stellung, in der er das Rad abhebt, zu verstellen, einen Pneumatikkreis, enthaltend eine Leitung (49), die die auf der Hinterseite der pneumatischen Einrichtung (45) gelegene Kammer mit einem zwischen zwei Stellungen umschaltbaren Elektroventil (50) verbindet, das mit einer Druckluftquelle verbunden ist, und einen Unterbrecher (51), um das Elektroventil (50) derart zu betätigen, daß es die genannte hintere Kammer mit der Umgebungsatmosphäre verbindet, wenn die Kolbenstange (15 ; 76) der hydraulischen Einrichtung (4 ; 75) vollständig zurückgezogen ist, und mit der Druckluftquelle verbindet, wenn die Kolbenstange (15 ; 76) der hydraulischen Einrichtung (4 ; 75) nicht vollständig zurückgezogen ist.

17. Fahrzeug nach Anspruch 16, dadurch gekennzeichnet, daß die auf der Seite der Stange gelegene Kammer der pneumatischen Einrichtung (45) eine Feder (48) enthält, die den Arm (44) in seine inaktive Stellung drückt, wenn die hinter dem Kolben liegende Kammer mit der Umgebungsatmosphäre verbunden ist.

FIG.1

FIG.2

FIG.3

FIG.4

FIG.5

EP 0 176 442 B1

EP 0 176 442 B1

FIG.6

3

FIG.7

EP 0 176 442 B1

FIG.8

FIG.9

FIG.10

FIG.11

EP 0 176 442 B1